# EUROPEAN PATENT APPLICATION

(11) **EP 1 462 500 A1**
(43) Date of publication of application: **29.09.2004**
(21) Application number: 03290796.6
(22) Date of filing: 28.03.2003
(51) Int. Cl.: C09J 201/00, C09J 123/22, C09J 175/04, C08G 18/10, C08G 18/28, C03C 27/10, C09K 3/10

(54) **Single component, chemically curing warm applied sealant for durable insulating glazing units**

(71) Applicant: LE JOINT FRANCAIS, 75008 Paris (FR)
(72) Inventor: Burkhardt, Volker, 64546 Moerfelden-Walldorf (DE); Reichardt, Ruediger, 64625 Bensheim (DE)
(74) Representative: Corizzi, Valérie

(57) **Abstract**

A single component, chemically curing, warm applied sealant which is applied as an edge sealant for insulating glass (IG) units sealant composition comprising :
- 10-40 % by weight of at least a thermoplastic hot melt resin selected from the group consisting of butyl rubbers, polybutenes, polyisobutylene, polyolefins, hydrocarbon resins, bitumens, polyamides, polyesters, thermoplastic elastomers and/or mixtures thereof ;
and
- 5-30 % by weight of at least an atmospheric curing resin selected from the group consisting of silylated polymers or pre-polymers of polyurethane and polyurea.

## Description

The invention is directed to a single component, chemically curing, warm applied sealant which is applied as an edge sealant for insulating glass (IG) units for the purpose of bonding the components of IG units together and sealing the units from moisture and gas penetration. Due to the single component characteristic of the present invention, mixing before the high temperature application is not required. After application at elevated temperature and upon cooling, the sealant creates a solid elastomer which will be transformed after further exposure to atmospheric moisture and/or oxygen into a thermoset cross-linked network with the properties of a chemically curing sealant system.

In the insulating glass industry, two major types of sealants are currently used :

One is a chemically curing two component product from the group of polysulfide, polyurethane, mercaptan-modified polyether polyurethane and silicone. These types of sealants cure irreversibly after application to form a solid sealant with good elastomeric and physical properties. Adhesion behaviour to glass and metallic or plastic surfaces of the spacer bar is improved by using an organo-silane adhesion promoter, which works as a coupling agent between the sealant and these surfaces. Two component sealants need to be used with a supplementary polyisobutylene based "primary" sealant in order to satisfy European certification tests for IG units concerning water vapour transmission and gas permeation rate. In addition, two component sealants have some application limitations and disadvantages related to their two component nature : mixing and ratio of the components is very important and must be very precise. After mixing of the two components, the cross-linking reaction starts. This reaction is irreversible and cannot be terminated. This behaviour of two component sealants creates problems in case of too fast curing of the sealant during equipment stops. In this case, the equipment must be thoroughly purged of the mixed sealant to avoid any curing in the equipment. All this creates waste and increases the cost of the final product. On the other hand, if the sealant has not cured properly, the sealant will not have the mechanical properties to sufficiently hold the glass panes in the IG units together.

The other traditional type of sealant is a non-chemically curing, thermoplastic, one component product based on butyl rubber. One component sealants, applied at high temperature, have the advantage that no mixing is required before application. Purging of the sealant during equipment stops is not necessary. Moreover, IG units can be handled and moved immediately after manufacturing. Disadvantages of one component, thermoplastic sealants are their lower mechanical performance properties. Because of their non-curing, thermoplastic nature, they do not perform well under high temperature static loads and have a very poor compression set. Furthermore, there is no chemical bonding between the one component sealant and the glass or spacer surface, so that the mechanical bond can be adversely affected by low temperature when the flexibility of the sealant is poor.

To overcome these disadvantages of the traditional sealants, patent applications are found in the literature disclosing one component, hot applied chemically curing sealant systems which combine the advantages of a two component sealant system with the advantages of single component systems.

International Patent Application No. WO 97/15619 discloses a one component, hot applied, chemically curing insulating glass sealant. The sealant contains a thermoplastic hot melt resin blended with an atmospheric curing resin. The sealant is described as comprising 10-90% by weight of a thermoplastic hot melt resin comprising a solid chlorinated paraffin and/or chlorinated plasticizer and 5-50% of an atmospheric curing resin such as a silane terminated polyurethane.

Problematic in this patent application is the use of chlorinated paraffin and/or chlorinated plasticizer in the sealant in view of their medical effects on human beings and animals. Chlorinated paraffins and/or chlorinated plasticizers tend to accumulate, particularly in tissues and organs rich in lipids.

U.S. Patent No. 6,121,354 discloses a hotmelt single component, chemically curing sealant comprising a styrene block copolymer, a moisture curable silylated polyurethane based on polybutadiene polyol, tackifier resins, polyethylene wax and an organosilane adhesion promoter.

This patent application discloses the use of polybutadiene polyol as a polyol component of the pre-polymer used as a moisture curable resin. Because of the use of styrene block copolymer as thermoplastic resin part, the sealant system is not moisture vapour and gas tight enough to guarantee an acceptable lifetime of the IG-units without using a polybutadiene based polyol. Due to this, this patent application has no possibility to vary the curable resin part of the invention. Therefore, easy variation and control of internal strength, elongation and compression set of the cured sealant is problematic.

International Patent Application No. WO 97/48778 discloses melt adhesive compositions containing a mixture of a reactive binder based on silanefunctional polyisobutylene, hydrated polybutadiene and/or poly-α-olefin and a non-reactive binder from the group of butyl rubbers, poly-α-olefin, styrene block copolymers. This sealant is formulated as a one or two part sealant for the production of double glazing and is useable in IG units also as spacer bar material.

This patent application discloses only the use of silane functional polyisobutylene, hydrated polybutadiene and/or poly-α-olefin. Use of silylated polyurethane based pre-polymers is not described. Easy variation and control of internal strength, elongation and compression set of the cured sealant by a wide variation of the curable resin or mixtures thereof is therefore not as easy as described in the present invention.

The present invention offers the benefits of a butyl based hot melt system : excellent MVTR (moisture vapour transmission rate) and gas-permeation rates, no premixing, minimum waste, fast setting, excellent cold and high temperature flexibility, quick IG unit handling, and those of a chemically curing IG sealant system : chemical adhesion build-up to glass, metal and plastic substrates, elimination of unit shear in hot climate, good elasticity and compression set.

Due to the excellent MVTR and gas permeation rates, the use of a polyisobutylene-based "primary seal", typically used in the IG industry to give IG units the moisture vapour and gas tightness, is not necessary. This benefit simplifies the production process for double glazing units and reduces production costs. On the other hand, a recycling process is easily possible after a double glazing unit has been dismantled.

With regards to prior art compositions, the compositions according to the invention give the possibility to vary the curable resin part of the composition. Therefore, easy variation and control of internal strength, elongation and compression set of the cured sealant can be obtained in the compositions according to the invention and not in those of the prior art.

Moreover, the sealants of the invention possess all these advantages without necessarily comprising polluting or irritating components like chlorinated plasticizers or solid chlorinated paraffins.

The compositions according to the invention, which overcome all the problems of prior art sealants, are characterized in that they contain:
- 10-40% by weight of a thermoplastic hot melt resin selected from the group of butyl rubbers, polybutenes, polyisobutylenes, polyolefins, hydrocarbon resins, bitumens, polyamides, polyesters, thermoplastic elastomers and/or mixtures thereof
   and
- 5-30% by weight of an atmospheric curing resin (moisture and/or oxygen curable) selected from the group consisting of silylated polymers or pre-polymers of polyurethane or polyurea.

Percentages are given by weight of each component with regards to the total weight of the composition.

Atmospheric curing resin means that this polymer or prepolymer phase starts to cure by reaction with atmospheric moisture and/or oxygen to form a cross-linked thermoset elastomer. The fully cured polymer and/or prepolymer together with the thermoplastic elastomer controls internal strength, elastic recovery and compression set of the sealant. After hydrolysis (which is the first step in the curing mechanism), the silyl end groups of the polymer or prepolymer improve adhesion to glass and to the metallic and/or plastic surface of the spacer bar due to their improved wetting behaviour to these substrates. In addition, due to the rheology behaviour of the silylated polymers and prepolymers, melt viscosity under melt conditions will be reduced during manufacturing of the sealant and at application time.

The silylated polyurethane polymer or pre-polymer used in the invention comprises the reaction product of a di- or trifunctional functional polyether and/or polyester based polyol, a diisocyanate and an organo-functional silane.

The silylated polyurea polymer or pre-polymer used in the invention comprises the reaction product of a di- or trifunctional functional polyether and/or polyester based polyamine, a diisocyanate and an organo-functional silane. Advantageously, the polyether and/or polyester based polyamine is a polyoxyalkyleneamine.

The polyether and/or polyester based polyols or polyamines used in this invention have a molecular weight between 1000 and 20000 g/mol, more preferably between 1000 and 10000 g/mol. The most preferably used polyether and/or polyester based polyols or polyamines in this invention are difunctional 1000 to 6000 molecular weight polyether-based polyols or polyamines. The molecular weight of the polyether and/or polyester based polyol or polyamine used and the degree of branching determine the cross-linking density of the sealant, which results in an exactly determined tensile modulus, elongation and compression set.

Silane end-capped polyurethane or polyurea polymers or pre-polymers generally are comprised of polyurethane or polyurea backbones, prepared at a low NCO/OH or NCO/NH₂ ratio, with reactive organo-functional silane groups at the ends. The ratio of isocyanate groups in the diisocyanate to hydroxy or amine groups in the polyether- or polyester based polyols or polyamines (NCO/OH or NCO/NH₂) used in the polymer or the pre-polymer of this invention is from about 1.8 to 2.2. They undergo cross-linking reactions in the presence of catalyst, moisture and/or oxygen to form a stable siloxane-linked network. The polymer or pre-polymer can be formulated with fillers, plasticizer and other additives to a one part temperature moisture curing product.

The diisocyanate component of the silane end-capped polyurethane or polyurea polymer or pre-polymer is di-functional. Due to this selective reactivity, the pre-polymer is stable. Diisocyanates used in this invention are based on hexamethylene diisocyanate, toluene diisocyanate, 4.4'-methylene diphenyl diisocyanate, blends of 2.4'-methylene diisocyanate and 4.4'-methylene diphenyl diisocyanate, and/or mixtures thereof. To endcap free isocyanate groups to form the silyl end groups, an organofunctional silane may be used.

Organofunctional silane component used to functionalize the polyurethane or polyurea polymer or pre-polymer includes gamma-isocyanatopropyltrimethoxysilane, aryl-amino-propyl-trimethoxy-silane, phenyl-amino-propyl-trimethoxy-silane, n-alkyl-amino-propyl-trimethoxy-silane, cyclo-alkyl-amino-propyl-trimethoxy-silane and/or mixtures thereof. Suitable as well are the triethoxy modifications of the respective silanes mentioned before.

The compositions according to the invention may further comprise other atmospheric curing resins selected from the group consisting of silylated polymers or pre-polymers of butyl rubbers, polybutenes, polyolefins, polyoxyalkyleneamines, and mixtures thereof.

The sealant composition according to the invention also comprises aromatic and/or aliphatic and/or polar tackifier resins, waxes and organofunctional silanes. In addition, the sealant may include plasticizer, fillers, pigments, UV absorbers, antioxidants, and catalysts.

Use of a polybutadiene based polyol to provide the advantage of low moisture transmission rate, described for example in U.S. patent 6.121.354, is not necessary in this invention. The compositions according to the present invention have the advantage of low moisture transmission rate thanks to an appropriate selection of the thermoplastic hot melt resin. In contradiction with the teachings of U.S. patent 6.121.354 the compositions according to the invention preferably comprise difunctional polyether or polyester based polymers or prepolymers.

To modify the solid and flow properties of the sealant, aromatic and/or aliphatic and/or polar tackifier resins may be used.

Especially polar tackifier resins from the group of glycerol ester of partially hydrogenated rosin improve the wetting behaviour to glass and to the metallic and/or plastic surface of the spacer bars and provide very strong mechanical adhesion of the sealant to polar substrates, like glass for example, by Polar van der Waals Associations. In addition, polar tackifier resins show an excellent resistance to oxidation and other properties affected by ageing. Favourite polar tackifier resins comprise 5 to 50% by weight of a glycerol ester of partially hydrogenated rosin.

Aliphatic tackifier resins (for example the Escorez types available from Exxon Chemical) are generally from the group of aliphatic hydrocarbon resins. Their main properties are the low level of unsaturation and their good compatibility with polar materials. They provide good stability, short setting time and good adhesion to substrates. In addition, they provide a particularly good tack/shear balance before and after ageing. Favourite aliphatic tackifier resins comprise 2 to 40% by weight of an aliphatic hydrocarbon resin.

To catalyze curing, an organic catalyst may be used. Preferred catalysts comprise organotin or organotitanates. Most preferably, the catalyst comprises dibutyltin dilaurate, dibutyltin alkylmercaptide, isopropyl triisostearoyl titanate and/or mixtures thereof. The addition of a catalyst is only necessary to improve the curing speed of the sealant according to customers' requirements. The sealant will still cure without addition of any catalyst. Favourite organocatalysts comprise 0,01 to 5% by weight of organotins or organotitanates.

Rheology behaviour and also strength properties depend on the type and quantity of fillers used in the sealant. One favourite filler is precipitated and/or ground calcium carbonate.

Use of ethylene vinyl acetate copolymer and/or terpolymer components in the sealant improves wetting to glass and metallic or plastic surfaces of the spacer bar and reduces melt viscosity under melt conditions. The polar characteristic of the ethylene vinyl acetate copolymer and terpolymer components improves physical bonding, especially to glass, when the silane endcapped polymer or polyurethane prepolymer is curing. The most preferred ethylene vinyl acetate copolymers and terpolymers are the Elvax types from DuPont with a vinyl acetate content of 25 % by weight minimum. Favourite compositions according to the invention comprise 2 to 20% by weight of ethylene vinyl acetate copolymers and/or terpolymers with a vinyl acetate content of 25 % by weight minimum.

The sealant composition according to the invention may further comprise at least one organofunctional silane selected from the group consisting of: vinyltrimethoxy silane, bis[(3-trimethoxysilyl)-propyl]amine, gamma-amino-propyl-trimethoxy silane and/or glycidoxy-propyl-trimethoxy silane. Favourite compositions according to the invention comprise 0,5 to 5% by weight of an organofunctional silane.

Organofunctional silane components provide superior covalent bonds between inorganic substrates and organic polymers. The silicone containing portion of the molecule provides strong bonding to polar substrates. The primary amine or glycidoxy function reacts with the thermoset and thermoplastic components in the sealant.

Preferentially, the sealant composition according to the invention has the following composition:

| | |
|---|---|
| Thermoplastic hot melt resin | 10-40 % by weight |
| Atmospheric curable resin | 5-30 % by weight |
| Polar tackifier resin | 5-50 % by weight |
| Aliphatic tackifier resin | 2-40 % by weight |
| Aromatic tackifier resin | 2-40 % by weight |
| Carbon black | 0.5-5 % by weight |
| Catalyst | 0.01-5 % by weight |
| Ethylene vinyl acetate copolymer | 2-20 % by weight |
| Fillers | 10-30 % by weight |
| Weatherability improvers | 0.01-5 % by weight |
| Organofunctional silane | 0.2-2 % by weight |

Preferentially, the atmospheric curable resin according has the following composition:

| | |
|---|---|
| Plasticizer | 10-20 % by weight |
| Polyether based polyol | 60-80 % by weight |
| Diisocyanate | 15-20 % by weight |
| Antioxidant | 0.5-2 % by weight |
| Catalyst | 0.01-0.05 by weight |
| Organofunctional silane | 5-15 % by weight |
| NCO/OH | 1.8-2.2 by weight. |

The silylated polyurethane polymer or prepolymer of the present invention may be prepared as follows in a two step process:
- synthesis of the NCO-terminated polyurethane polymer or prepolymer, and
- preparation of the silane-endcapped polyurethane.

The most preferred diisocyanate used in this invention is 4.4'-diphenylmethane diisocyanate. The most preferred polyols are difunctional 1000 - 6000 molecular weight polyether-based polyols. Dibutyltin dilaurate is the favourite catalyst. The organofunctional silanes used to endcap the prepolymer are preferably aryl-amino-propyl-trimethoxy-silane, phenyl-amino-propyl-trimethoxy-silane, n-alkyl-amino-propyl-trimethoxy-silane, cyclo-alkyl-amino-propyl-trimethoxy-silane, n-alkenyl-amino-propyl-trimethoxy-silane. The NCO-terminated polyurethane is made in the usual way by reacting an excess of the diisocyanate with the polyol in the presence of dibutyl dilaurate at an NCO/OH ratio of most preferably 1.8 to 2.2. The reactions are run at 70°C for about 2.5 to 3 hours to reach a constant percent NCO. The organofunctional silane is added to the polymer or prepolymer for endcapping under the same reaction conditions. The silane addition is based on the percentage of NCO in the polyurethane polymer or prepolymer as determined by titration. An excess of 10-15 % silane ensures that the NCO concentration at the end of the reaction is zero.

When a polyurea polymer or copolymer is to be prepared, the process is the same, a polyoxyalkyeneamine is used in replacement of the polyol.

The sealant of the present invention may be prepared in the following one step process: The thermoplastic hot melt resin or mixtures thereof, atmospheric curing resin or mixtures thereof, pigments, aliphatic and polar tackifier and/or mixtures thereof , fillers, plasticizer and antioxidants are added in a mixing vessel. The mixing equipment has to be capable of mixing under vacuum. A sigma blade mixer with a low speed auger may be suitable. The ingredients are mixed under vacuum and heated to temperatures of 120 to 160°C. During this temperature, the thermoplastic hot melt and the tackifier resins melt and become the liquid carrier for the other solid raw materials. The mixture is maintained under vacuum until all ingredients are molten and blended homogeneously. Very good vacuum is necessary to remove all residual water from the raw materials and to improve the packaging stability of the sealant. When the mixture is homogeneous, the temperature is reduced to 100 to 120°C and UV-stabilizer, organofunctional silane and catalysts are added and blended under vacuum until homogeneity is achieved. In all steps during production, the mixing vessel has to be maintained under dry conditions.

The sealant of the present invention is applied as an edge sealant to the insulating glass units with a hot pump in form of a liquid or a paste at temperatures of approximately 100 to 180°C, preferably 120 to 170°C. After application, the sealant cools down to a solid and starts to cure to a thermoset solid elastomer by reaction with atmospheric moisture and/or oxygen.

Another object of the present invention is an insulating glass unit having a first glazing pane maintained in a spaced apart relation with a second glazing pane by a spacer and an edge sealant as described above.

The hot melt resin is a solid thermoplastic elastomer at room temperature, preferably one which solidifies immediately after hot application and upon cooling. The thermoplastic hot melt resin provides melt viscosity and sag resistance to the sealant at higher application temperatures. As long as the atmospheric curing agent is not fully cured, the thermoplastic hot melt resin controls the internal strength, elongation and compression set of the sealant. The thermoplastic hot melt resin provides a very low moisture vapour transmission rate and gas permeation of the sealant.

Advantages :
- A "primary seal" based on a moisture and gas tight polyisobutylene, used and necessary in IG-units sealed with two component sealants, as reported before, is not necessary in IG units sealed with an edge sealant formulated according to the invention.
- The sealant composition according to the invention is free of any chlorinated plasticizers or any solid chlorinated paraffins.
- The sealant creates a solid elastomer after application at elevated temperatures and upon cooling and changes the thermoplastic characteristic of a regular thermoplastic hot melt into a thermoset cross-linked characteristic of a chemically curing sealant system with the advantage of a chemical adhesion build-up to glass, metal and plastic substrates, the elimination of unit shear in hot climates, good elasticity and compression set.

The invention is further illustrated by the following examples.

### EXAMPLES

### Example 1A: Silylated polyurethane polymer or pre-polymer

A pre-polymer was prepared from the following materials:

A polyether based polyol (Voranol EP 1900 which is available from DOW Plastics), a plasticizer (DINP, which is available from ExxonMobile), an antioxidant (Irganox 1010, which is available from CIBA), a 4.4'-methylene-diphenyl-diisocyanate (Isonate, which is available from DOW Plastics), a dibutyl-tin-dilaurate catalyst and a n-butyl-amino-propyl-trimethoxy-silane. The ratio of NCO / OH is 2.0.

The components were introduced in the following quantities in weight percent with regards to the total weight of the reaction mixture:

| | |
|---|---|
| Polyether and/or polyester based polyol | 65 % by weight |
| Phthalic acid ester plasticizer | 10 % by weight |
| Antioxidant | 0.8 % by weight |
| 4.4'-methylene-diphenyl-diisocyanate | 15 % by weight |
| Dibutyl-tin-dilaurate | 0.002 % by weight |
| n-butyl-amino-propyl-trimethoxy-silane | 9.2 % by weight |

The polyether and/or polyester based polyol, the phthalic acid ester plasticizer, the antioxidant and Dibutyl-tin-dilaurate were added to a mixing device and were heated under vacuum to a temperature of 75 °C for 30 minutes to remove any residual water. 4.4'-methylene-diphenyl-diisocyanate was added very slowly to the mixing device. The mixture reacted under vacuum for about 180 minutes at a temperature of 100 °C. N-butyl-amino-propyl-trimethoxy-silane was added to the mixing device and the mixture reacted under vacuum for about 120 min at a temperature of 80 °C.

### Example 1B:Isocyanated terminated polyurethane polymer or prepolymer

### A prepolymer was prepared from the following materials:

A polyether based polyol (Voranol EP 1900 which is available from DOW Plastics), a plasticizer (DINP, which is available from ExxonMobile), an antioxidant (Irganox 1010, which is available from CIBA), a 4.4'-methylene-diphenyl-diisocyanate (Isonate, which is available from DOW Plastics), a dibutyl-tin-dilaurate catalyst and a polyether based polyol (Voranol EP 1900 which is available from DOW Plastics). The ratio of NCO / OH was 1.8.

The components were introduced in the following quantities in weight percent with regards to the total weight of the reaction mixture

| | |
|---|---|
| Polyether and/or polyester based polyol | 70 % by weight |
| Phthalic acid ester plasticizer | 8.7 % by weight |
| Antioxidant | 0.8 % by weight |
| 4.4'-methylene-diphenyl-diisocyanate | 14.4 % by weight |
| Dibutyl-tin-dilaurate | 0.002 % by weight |
| Polyether based polyol | 6.1 % by weight |

The polyether and/or polyester based polyol, the phthalic acid ester plasticizer, the antioxidant and Dibutyl-tin-dilaurate were added to a mixing device and were heated under vacuum to a temperature of 75 °C for 30 minutes to remove any residual water. 4.4'-methylene-diphenyl-diisocyanate was added very slowly to the mixing device. The mixture reacted under vacuum for about 180 minutes at a temperature of 100 °C. The Polyether based polyol was added to the mixing device and the mixture reacted under vacuum for about 180 min at a temperature of 80 °C.

### Example 2:

The following formulation is an example for the preparation of an edge sealant. The percentages are given in weight percent of each component with regards to the total weight of the composition.

| | |
|---|---|
| Thermoplastic hot melt resin | 25.7 % by weight |
| (Polyisobutylene rubber, Oppanol B 100, BASF) | |
| Atmospheric curable resin | 17.3 % by weight |
| (prepolymer according Example 1A or 1B) | |
| Aliphatic tackifier resin | 5.7 % by weight |
| (Escorez 1304, Exxon Chemicals) | |
| Aliphatic tackifier resin | 7.2 % by weight |
| (Vestoplast 508, DEGUSSA) | |
| Aromatic tackifier resin | 2.4 % by weight |
| (Dertophene B 200, DRT, S.A.) | |
| Carbon Black | 0.75 % by weight |
| (Monarch 590) | |
| Catalyst | 0.05 % by weight |
| (Dibutyl-tin-dilaurate) | |
| Ethylene-vinylacetate copolymer | 11.2 % by weight |
| (Elvax 265, DuPont) | |
| CaCO3-fillers | 27.7 % by weight |
| (Winnofil SPM, Solvay) | |
| Weatherability improvers | 0.5 % by weight |
| (Irganox 1010, Ciba) | |
| Organofunctional Silane | 0.5 % by weight |
| (Vinyl-trimethoxy-silane, DEGUSSA) | |
| Organofunctional Silane | 0.5 % by weight |
| (Glycidoxy-propyl-trimethoxy-silane, DEGUSSA) | |
| Organofunctional Silane | 0.5 % by weight |
| (Gamma-amino-propyl-trimethoxy-silane, DEGUSSA) | |

The sealant of the present invention may be prepared according to the following one step process:

A sigma blade mixer with a low speed auger is suitable. The thermoplastic hot melt resin, atmospheric curing resin, aliphatic and aromatic tackifier and ethylene-vinylacetate copolymer are added in a mixing vessel. The ingredients are mixed under vacuum for 45 to 60 minutes and heated to temperatures of 120 to 140°C. During this temperature, the thermoplastic hot melt, the tackifier resins and ethylene-vinylacetate copolymer melt and become the liquid carrier for the other solid raw materials. Catalyst and fillers are added. The mixture is maintained under vacuum until all ingredients are molten and blended homogeneously.. When the mixture is homogeneous, the temperature is reduced to 100 °C and weatherability improvers, organofunctional silanes and catalysts are added and blended under vacuum for about 15 minutes. In all steps during production, the mixing vessel is maintained under dry conditions. The sealant produced according the process above was packaged in drums and pails and sealed against moisture.

## Claims

1. A sealant composition comprising :
- 10-40 % by weight of at least a thermoplastic hot melt resin selected from the group consisting of butyl rubbers, polybutenes, polyisobutylene, polyolefins, hydrocarbon resins, bitumens, polyamides, polyesters, thermoplastic elastomers and/or mixtures thereof ;
and
- 5-30 % by weight of at least an atmospheric curing resin selected from the group consisting of silylated polymers or pre-polymers of polyurethane and polyurea, and mixtures thereof.

2. A sealant composition according to claim 1, wherein the atmospheric curing resin further comprises at least one compound selected from the group consisting of silylated polymers or pre-polymers of butyl rubbers, polybutenes, polyolefins polyoxyalkyleneamines, and mixtures thereof.

3. A sealant composition according to anyone of claim 1 and claim 2, wherein the silylated polyurethane pre-polymer comprises the reaction product of a di- or trifunctional functional polyether and/or polyester based polyol, a diisocyanate and an organofunctional silane.

4. A sealant composition according to anyone of claim 1 to claim 3, wherein the silylated polyurea pre-polymer comprises the reaction product of a di- or trifunctional functional polyether and/or polyester based polyamine, a diisocyanate and an organofunctional silane.

5. A sealant composition according to claim 3 or claim 4, wherein the polyether and/or polyester based polyol or polyamine has a molecular weight between 1000 and 20000 g/mol, more preferably between 1000 and 10000 g/mol.

6. A sealant composition according to claim 5, wherein the polyether and/or polyester based polyol or polyamine is a difunctional 1000 to 6000 molecular weight polyether-based polyol or polyamine.

7. A sealant composition according to anyone of claim 1 to claim 6, wherein the silane endcapped polyurethane polymer or pre-polymer consists in a polyether or polyester based polyurethane backbone with reactive organofunctional silane groups at the ends.

8. A sealant composition according to anyone of claim 1 to claim 6, wherein the silane endcapped polyurea polymer or pre-polymer consists in a polyoxyalkyleneamine based polyurea backbone with reactive organofunctional silane groups at the ends.

9. A sealant composition according to claim 3, wherein the ratio of isocyanate groups in the diisocyanate to hydroxy groups in the polyether- or polyester based polyols (NCO/OH) used in the polymer or pre-polymer of this invention is from 1.8 to 2.2.

10. A sealant composition according to claim 4, wherein the ratio of isocyanate groups in the diisocyanate to amine groups in the polyether- or polyester based polyamine (NCO/NH₂) used in the polymer or pre-polymer of this invention is from 1.8 to 2.2.

11. A sealant composition according to claim 3 or claim 4, wherein the diisocyanates are selected from hexamethylene diisocyanate, toluene diisocyanate, 4.4'-methylene diphenyl diisocyanate, blends of 2.4'-methylene diisocyanate and 4.4'-methylene diphenyl diisocyanate, and mixtures thereof.

12. A sealant composition according to claim 11, wherein the diisocyanate is 4.4'-diphenylmethane diisocyanate.

13. A sealant composition according to claim 3 or claim 4, wherein the organofunctional silane used to functionalize the polyurethane or polyurea polymer or prepolymer is selected from gamma-isocyanatopropyltrimethoxysilane, aryl-amino-propyl-trimethoxy-silane, phenyl-amino-propyl-trimethoxy-silane, n-alkyl-amino-propyl-trimethoxy-silane, cyclo-alkyl-amino-propyl-trimethoxy-silane, n-alkenyl-amino-propyl-trimethoxy-silane, aryl-amino-propyl-triethoxy-silane, phenyl-amino-propyl-triethoxy-silane, n-alkyl-amino-propyl-triethoxy-silane, cyclo-alkyl-amino-propyl-triethoxy-silane, n-alkenyl-amino-propyl-trimethoxy-silane, and mixtures thereof.

14. The sealant composition according to any one of claim 1 to claim 13, wherein it further comprises at least one compound selected from the group consisting of aromatic and/or aliphatic and/or polar tackifier resins, catalysts, fillers, waxes, organofunctional silanes, plasticizer, pigments, UV absorbers, antioxidants, weatherability improvers.

15. The sealant composition according to claim 14, wherein it comprises at least one organofunctional silane selected from the group consisting of: vinyltrimethoxy silane, bis[(3-trimethoxysilyl)-propyl]amine, gamma-amino-propyl-trimethoxy silane and/or glycidoxy-propyl-trimethoxy silane.

16. The sealant composition according to claim 14, wherein the polar tackifier resin comprises 5 to 50 % of a glycerol ester of partially hydrogenated rosin.

17. The sealant composition according to claim 14, wherein the aliphatic tackifier resin comprises 2 to 40 % of an aliphatic hydrocarbon resin.

18. The sealant composition according to claim 14, wherein the organic catalyst comprises dibutyltin dilaurate, dibutyltin alkylmercaptide, isopropyl triisostearoyl titanate and/or mixtures thereof.

19. The sealant composition according to claim 14, wherein the organic catalyst comprises 0.01 to 5 % of organotin or organotitanates.

20. The sealant composition according to claim 14, wherein it further comprises 2 to 20 % of ethylene vinyl acetate copolymer and/or terpolymer with a vinylacetate content of minimum 25 %.

21. The sealant composition according to any one of claim 1 to claim 20, wherein it has the following composition :
| | |
|---|---|
| Thermoplastic hot melt resin | 10-40 % by weight |
| Atmospheric curable resin | 5-30 % by weight |
| Polar tackifier resin | 5-50 % by weight |
| Aliphatic tackifier resin | 2-40 % by weight |
| Aromatic tackifier resin | 2-40 % by weight |
| Carbon black | 0.5-5 % by weight |
| Catalyst | 0.01-5 % by weight |
| Ethylene vinyl acetate copolymer | 2-20 % by weight |
| Fillers | 10-30 % by weight |
| Weatherability improvers | 0.01-5 % by weight |
| Organofunctional silane | 0.2-2 % by weight |

22. The sealant composition according to any one of claim 1 to claim 21, wherein the atmospheric curable resin has the following composition :
| | |
|---|---|
| Plasticizer | 10-20 % by weight |
| Polyether based polyol | 60-80 % by weight |
| Diisocyanate | 15-20 % by weight |
| Antioxidant | 0.5-2 % by weight |
| Catalyst | 0.01-0.05 by weight |
| Organofunctional silane | 5-15 % by weight |
| NCO/OH | 1.8-2.2 by weight. |

23. An insulating glass unit having a first glazing pane maintained in a spaced apart relation with a second glazing pane by a spacer and an edge sealant according to any one of claim 1 to 22.
